# DEMANDE DE BREVET EUROPEEN

(11) **EP 0 951 954 A1**
(43) Date de publication de la demande: **27.10.1999**
(21) Numéro de dépôt: 99400916.5
(22) Date de dépôt: 15.04.1999
(51) Int. Cl.: B21B 3/02, C21D 8/02, C21D 8/04

(54) **Acier inoxydable utilisable dans le domaine de la cuverie et notamment dans le domaine de la cuverie vinicole.**

(30) Priorité: 23.04.1998 FR 9805072
(71) Demandeur: UGINE S.A., F-92800 Puteaux (FR)
(72) Inventeur: Boulange, Laurence, 73460 Sainte Hélène sur Isère (FR); Moutounet, Michel, 34080 Montpellier (FR); Haegeli, Françoise, 78260 Achères (FR); Dupré, Karine, 34416 Pontchateau (FR); Vernhet, Aude, 34090 Montpellier (FR)
(74) Mandataire: Neyret, Daniel Jean Marie

(57) **Abrégé**

Tôle d'acier inoxydable austénitique utilisable dans le domaine de la cuverie et notamment dans le domaine de la cuverie vinicole, la tôle étant laminée à froid et présentant un état de surface dont la rugosité mesurée par AFM sur des plages de 100 µm par 100 µm est définie par un Ra compris entre 0.05 µm et 0,15 µm.

## Description

La présente invention concerne un acier utilisable dans le domaine de la cuverie et notamment dans le domaine de la cuverie vinicole.

L'acier inoxydable est un matériau fréquemment utilisé dans le domaine de la cuverie vinicole. Au cours de l'élaboration des vins, on procède à une opération de stabilisation à froid qui a pour but de précipiter l'acide tartrique sous forme d'hydrogénotartrate de potassium (THK), contenu dans le vin, et d'éviter les dépôts de fond en bouteilles.

Les couches de tartre formées lors des fermentations alcooliques et malo lactiques et de l'élaboration des vins peuvent être adhérentes et difficiles à éliminer par des opérations classiques de nettoyage menées en fin de campagne vinicole. Actuellement, l'automatisation des techniques viticoles a entraîné une réduction, en nombre, du personnel responsable de l'entretien des cuves. De ce fait, les viticulteurs recherchent, des cuves ayant des surfaces facilement nettoyables et une limitation de la consommation d'eau et d'effluents lors du nettoyage desdites cuves.

Il est connu des tôles d'acier utilisées dans le domaine vinicole présentant un état de surface de type référencé « fini 2R », considérées comme étant susceptibles de limiter l'entartrage. La qualité de surface de ces tôles, du type recuit brillant, sans défaut de surface, est considérée comme prépondérante pour réduire ces mécanismes.

Cependant, les tôles d'acier présentant l'état de surface ci-dessus décrit posent le problème du maintien de la qualité de brillance des tôles lors de la fabrication de la cuve par un chaudronnier, et celui du nettoyage des cuves par le viticulteur, du fait de la très forte réverbération des torches électriques d'éclairage utilisées lors du nettoyage de ces cuves.

Jusqu'à présent, on a toujours considéré que les surfaces d'acier inoxydable présentant des valeurs de rugosité moyenne les plus faibles possibles permettaient de limiter l'entartrage des surfaces dans le domaine vinicole, d'où 1'usage de tôles d'acier avec un état brillant fini 2R.

Le but de l'invention est de réaliser des tôles comportant un état de surface apportant certains caractères vis à vis des précipitations, par exemple tartrique dans le cas du vin, cet état de surface limitant l'adhérence de certains composés de vin, le THK en particulier, tout en améliorant la nettoyabilité.

L'invention a pour objet une tôle d'acier inoxydable austénitique utilisable dans le domaine de la cuverie et notamment dans le domaine de la cuverie vinicole, tôle laminée à froid et présentant un état de surface dont la rugosité mesurée par AFM sur des plages de 100 µm par 100 µm est définie par un Ra compris entre 0.05 µm et 0,15 µm.

Les autres caractéristiques de l'invention sont :
- les joints de grains ont une profondeur comprise entre 0,1 µm et 0,5 µm et de préférence d'environ 0,4 µm et une largeur comprise entre 0,5 µm et 1,8 µm et de préférence d'environ 1,5 µm.
- les grains du métal, en surface, ont un diamètre moyen compris entre 5 µm et 20 µm.
- l'amplitude moyenne de la surface des grains mesurée par AFM est compris entre 5 nm et 30 nm et de préférence d'environ 10 nm.

L'invention concerne également un procédé de réalisation d'une tôle d'acier inoxydable austénitique utilisable dans le domaine de la cuverie et notamment dans le domaine de la cuverie vinicole caractérisé en ce qu'on effectue sur une tôle d'acier austénitique ayant une surface de type 2B un laminage à froid de manière à aplatir les grains en les repoussant vers les joints de grains de façon à refermer lesdits joints de grains, la surface de la tôle d'acier présentant des joints de grains de forme étroite et peu profonde et des grains très aplats sans micro-rugosité en surface.

Selon une autre caractéristique du procédé, la forme aplatie des grains est obtenue par un laminage à froid final tel qu'un laminage de type « skin pass » avec un taux de réduction inférieur à 5%, de préférence inférieur à 4%.

La description qui suit et les figures annexées, le tout donné à titre d'exemple non limitatif fera bien comprendre l'invention.

Les figures 1a et 1b présentent respectivement un profil de surface et un histogramme matérialisant l'état de surface d'une tôle d'acier laminé de type 2B classique.

Les figures 2a et 2b présentent respectivement un profil de surface et un histogramme matérialisant l'état de surface d'une tôle d'acier laminé selon l'invention.

Il a été mis en évidence les mécanismes d'entartrage des surfaces de manière comparative, et des tests de nettoyabilité ont permis de différencier, en qualité, les états de surfaces de tôles d'aciers inoxydables industriels avec l'état de surface d'une tôle selon l'invention.

L'utilisation de l'acier s'est largement répandue dans le secteur de l'industrie alimentaire. Son évolution depuis plus de soixante années s'explique par le fait qu'il répond parfaitement aux exigences attendues pour les matériaux mis en contact avec les aliments et qui peuvent se résumer en trois points;
- neutralité chimique, bactériologique et organoleptique vis à vis du produit alimentaire,
- aptitude au nettoyage et garantie de l'hygiène par rapport aux autres matériaux,
- inaltérabilité, résistance à la corrosion et au vieillissement du produit alimentaire.

De par ses caractéristiques mécanique et physiques, l'acier inoxydable austénitique répond parfaitement aux attentes des chaudronniers:
- absence de fragilité et parfaite résistance au chocs,
- insensibilité aux variations de température et de pression,
- caractéristiques mécaniques élevées qui permettent un allégement des installations,
- une très bonne soudabilité et une très bonne ductilité assurant des mises en formes faciles.

La topographie d'une surface d'une tôle d'acier peut être caractérisée à trois niveaux différents:

Le niveau d'ordre 1 qui matérialise, par exemple, les stries dues au laminage ou encore les ondulations de la tôle. La taille des stries de laminage est supérieure ou égale à environ 100 µm.

Le niveau d'ordre 2 qui présente une surface d'acier au niveau des grains du métal avec un ordre de grandeur de 10 à 20 µm.

Le niveau d'ordre 3 qui prend en compte les défauts à la surface d'un grain et qui correspond à la micro géométrie de la surface.

Le niveau 3 est uniquement visible par l'AFM ( Microscopie à Force Atomique) qui possède une sensibilité plus grande par rapport aux autres techniques couramment utilisées dans le domaine de la caractérisation des surfaces.

Sur des plages de 100 µm x 100 µm, il apparaît dans une analyse à un niveau d'ordre 3 des surfaces dites standard qualifiée 2B, des sous grains constituant un grain où les sous joints ont une profondeur de 0,1 µm et une largeur de 0,15 µm. On note également des petites dépressions de largeur d'environ 0,3 µm et de profondeur d'environ 80 nm. Les joints de grains présentent une profondeur de 0,5 µm et une largeur de 5 µm. On note aussi la présence de trous dont le diamètre peut atteindre plusieurs microns. La rugosité mesurée sur une telle surface et présentée par l'indice Ra est d'environ 0,5 µm déterminée par interférométrie et AFM sur des plages de 100 µm x 100 µm.

Du point de vue des mécanismes d'entartrage, il apparaît que les levures présentes dans le vin adhèrent en premier aux surfaces d'acier et servent de germes de nucléation aux cristaux de tartre. Il a été mis en évidence que l'adhésion des levures à la surface d'un acier inoxydable dépend à la fois des propriétés physico-chimiques de la surface, quantifiables par des mesures d'angles de contact, mais également, de la topographie de la surface quantifiable par des mesures de rugosité. De plus, du fait de la présence de joints de grains sur les surfaces, par exemple de type 2B, les levures adhèrent préférentiellement aux joints de grains sur les surfaces et adhèrent préférentiellement sous la forme d'amas sur les surfaces de type 2R, recuit brillant.

Du fait du caractère basique de la surface des levures, l'acide tartrique présent dans le vin a une forte affinité pour les levures et précipite préférentiellement sur lesdites levures. Les macromolécules présentes dans le vin ont un effet inhibiteur sur la précipitation tartrique. Il a été remarqué que cet effet est surtout visible pour les polyphénols et polysaccharides, macromolécules du vin. Selon la composition du vin, qui varie d'une année sur l'autre, et selon la quantité de polyphénols adsorbés, la croissance de cristal peut être fortement inhibée ou non. Dans le cas de vin blanc, où les polyphénols sont en quantité beaucoup plus faibles, les cristaux de THK peuvent croître sur la surface.

Dans un exemple comparatif, il a été effectué des tests d'entartrage avec deux vins rouges dont les compositions sont présentées en tableau 1.

**Tableau 1 :**

| **Composition** | **Vin 1995** | **Vin 1997** |
|---|---|---|
| pH | 3,6 | 3,7 |
| Acide tartrique (g/l) | 5,9 | 2,6 |
| Polysaccharides (mg/l) | 342,4 | 457 |
| AGPs | 120,5 | 301 |
| Mps | 70,6 | 69 |
| RG-II | 137 | 67 |
| RG-I | 13,5 | 14 |
| Polyphénois | 1,42 | 1,23 |

Le vin de 1995 est plus chargé en acide tartrique que celui de 1997. En revanche, ce dernier présente une teneur en polysaccharides plus importante.

Les dépôts obtenus après passage au froid mesurés en mg/cm², sur différents types de qualité de surface ont été analysés par techniques physicochimiques et présentés sur le tableau 2.

**Tableau 2 :**

| | **Vin 1995** | | **Vin 1997** | |
|---|---|---|---|---|
| | 2B | 2R | 2B | 2R |
| Levures (%) | 24 | 65 | 20 | 22 |
| THK (%) | 69 | 9 | 76 | 77 |
| Polyphénois | 1,6 | 27 | 1,9 | 1,8 |
| Polysaccharides (%) | 0,9 | - | 0,7 | 0,6 |

On met en évidence le fait que la composition du dépôt varie selon la composition du vin et l'état de surface de la tôle de la cuve.

La tôle d'acier inoxydable selon l'invention, utilisable dans le domaine de la cuverie et notamment dans le domaine de la cuverie vinicole est un acier austénitique laminé à froid et présentant un état de surface caractérisé en ce que les grains du métal ont un diamètre moyen compris entre 5 µm et 20 µm, l'amplitude moyenne des grains mesurée par AFM étant de 10 nm.

Les joints de grains ont une profondeur comprise entre 0,1 µm et 0,5 µm et une largeur comprise entre 0,5 µm et 1,8 µm. La rugosité mesurée par l'indice Ra sur des plages 100 µm x 100 µm au moyen de la méthode par AFM est comprise entre 0,05 µm et 0,15 µm.

Selon l'invention, l'état de la surface est obtenu par un laminage à froid permettant d'aplatir les grains d'une surface de type 2B en les repoussant vers les joints de grains. De ce fait, les joints de grains sont refermés. Dans cette structure nouvelle, il a été remarqué que les joints de grains ne peuvent plus piéger les micro-organismes.

La tôle d'acier inoxydable par exemple du type AISI 304 ou 316L, est élaborée à partir d'une brame, puis a subi un laminage à chaud, un recuit, un grenaillage et un décapage, un laminage à froid et un recuit final suivi d'un décapage chimique et d'un laminage à faible taux de réduction final dit « skin pass », selon le procédé de l'invention. Après élaboration classique de cette tôle d'acier, des joints de grains sont obtenus. En revanche, grâce à une optimisation des conditions de fabrication selon l'invention, le métal est repoussé dans les joints de grains grâce au laminage à froid final de faible taux de réduction, inférieur à 5% et de préférence inférieur à 4%, qui déforme les joints de grains du métal. Dans ce cas, les joints de grains ont une taille et une forme spécifique, une forme aplatie qui permet l'élimination des micro-organismes adhérents habituellement aux surfaces de l'acier inoxydable.

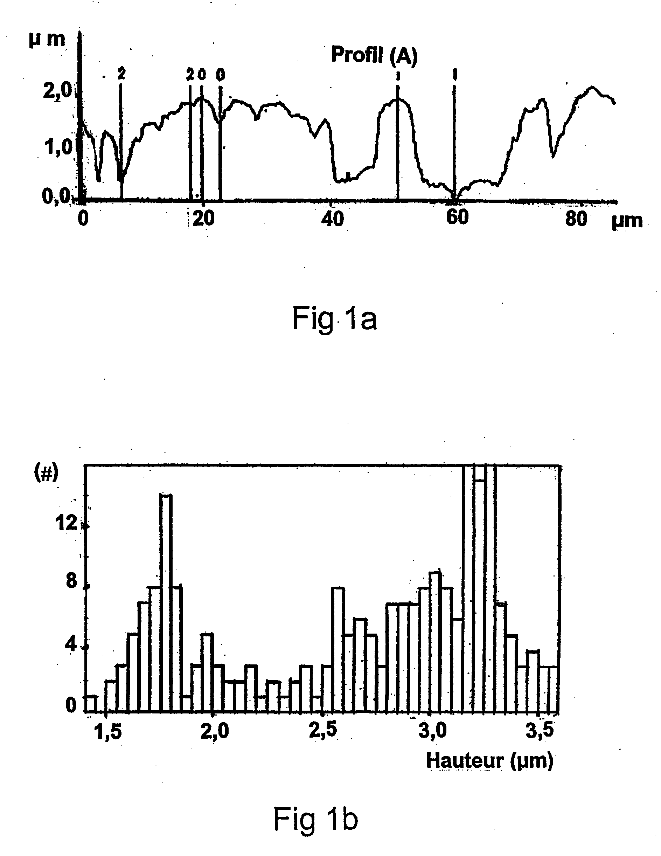

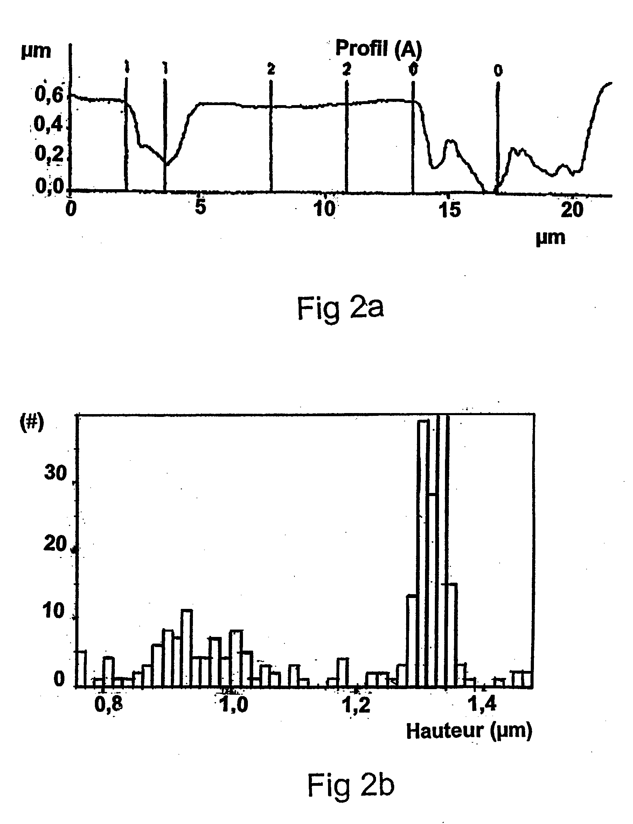

Les figures 1a et 1b qui présentent respectivement un profil de surface et un histogramme matérialisant l'état de surface d'une tôle d'acier de type 2B classique sont à comparer aux figures 2a et 2b qui présentent respectivement un profil de surface et un histogramme matérialisant l'état de surface d'une tôle d'acier selon l'invention.

Dans des essais d'entartrage, les tôles échantillons sont placées sur un échangeur-drapeau dans lequel un liquide refroidisseur circule. La température des échantillons est comprise entre 4 et 5°C. Les échantillons constituent le point froid de la paroi de cuve et par conséquent, le dépôt de THK a lieu sur l'échantillon. Après stabilisation du vin, déterminée grâce à la baisse de conductivité, l'échantillon est retiré et séché à l'air avant une prise de masse.

Dans le domaine du nettoyage des surfaces, il a été démontré que la nettoyabilité était fonction de la topographie de la surface, les levures ou le tartre pouvant se déposer de manière préférentielle sur les surfaces de grains de la tôle d'acier ou dans les zones de défauts comme les joints de grains ou encore, dans les zones de défauts de forme spécifique avec un joint de grain de forme imposée. Selon l'invention, la surface de la tôle d'acier a pour caractéristique de présenter un joint de grain de forme étroite et peu profonde et un grain très aplati sans micro-rugosité.

On entend par forme imposée la forme des grains de dimension moyenne ramenée à un cercle équivalent compris entre 5 µm et 20 µm et ayant une surface de grain présentant une micro-rugosité comprise entre 10 nm et 100 nm, le joint de grain étant refermé.

La forme écrasée des grains est obtenue par un laminage à froid final de type « skin pass » avec un taux de déformation compris entre 0,4 % et 2%.

La nettoyabilité est mesurée par perte de masse avant et après nettoyage. Le nettoyage est réalisé dans une cellule à flux laminaire où sont contrôlés la pression de l'eau, par exemple à 0,1 bar, le temps de nettoyage, et la température qui est choisie entre 20°C et 50°C.

Les tableaux 3 et 4 présentent les pertes en masse après nettoyage d'échantillons de tôle pour deux types de vins et pour la tôle d'acier selon l'invention et deux tôles d'acier de type recuit brillant 2R et de type 2B.

**Tableau 3 :**

| **Nettoyabilité %** | **Acier selon l'invention** | **Fini 2R** | **Fini 2B** |
|---|---|---|---|
| vin rouge | | | |
| eau froide | 84 | 91 | 80 |
| eau chaude | 98 | 99 | 98 |

Dans tous les cas, il reste sur la tôle des traces de matière colorée de l'ordre de 1% qu'il est nécessaire d'éliminer par un lavage à la soude.

L'acier selon l'invention présente, en qualité, des caractéristiques intermédiaires entre un acier du type recuit brillant et un acier de type 2B.

**Tableau 4 :**

| **Nettoyabilité** | **Acier selon l'invention** | **Fini 2R** | **Fini 2B** |
|---|---|---|---|
| vin blanc | | | |
| eau froide | 44 | 90 | 45 |
| eau chaude | 91 | 97 | 88 |

Après formation des dépôts de THK sur les surfaces, un nettoyage à l'eau froide, puis à l'eau chaude est nécessaire. Il a été mesuré la quantité d'eau froide et chaude utile pour nettoyer les tôles échantillons. Le passage de l'eau froide à l'eau chaude est réalisé lorsque visuellement le dépôt ne se décroche plus de la surface. La consommation d'eau pour le nettoyage des surfaces après contact avec le vin est donnée dans les tableaux 5 et 6.

**Tableau 5 :**

| **Consommation (m3/m2)** | **Acier selon l'invention** | **Fini 2R** | **Fini 2B** |
|---|---|---|---|
| vin rouge | | | |
| eau froide | 2,2 | 2,6 | 3,0 |
| eau chaude | 1,8 | 2,0 | 2,7 |

**Tableau 6 :**

| **Consommation (m**^{**3**}**/m**^{**2**}**)** | **Acier selon l'invention** | **Fini 2R** | **Fini 2B** |
|---|---|---|---|
| vin blanc | | | |
| eau froide | 2,8 | 2,4 | 2,9 |
| eau chaude | 1,4 | 1,7 | 1,6 |

Dans l'exemple du tableau 6, le vin blanc pris en référence est très riche en polysaccharides, ce qui génère des dépôts très adhérents.

Dans le cas des vins rouges, après nettoyage à l'eau froide et à l'eau chaude, il reste, dans tous les cas, des traces de matières colorantes très visibles à l'oeil nu. Ces matières colorantes sont rouge initialement mais noircissent par oxydation à l'air.

Il est nécessaire de nettoyer les surfaces à la soude afin d'assurer la propreté des surfaces des cuves. La consommation de la soude est donnée dans le tableau 7.

**Tableau 7 :**

| **Surfaces** | **Acier selon l'invention** | **Fini 2R** | **Fini 2B** |
|---|---|---|---|
| Consommation (l/m²) | 220 | 410 | 320 |

Avec la tôle d'acier selon l'invention, comportant l'état de surface proposé, le traitement des effluents est considérablement limité.

La blancheur et la brillance de la surface de la tôle d'acier ont été mesurées avant et après utilisation et nettoyage afin de vérifier l'aspect esthétique et la conservation de l'état de surface. En effet, des matières colorantes peuvent rester en surface après le nettoyage. Le tableau 8 indique la brillance et la blancheur obtenues avant et après nettoyage.

**Tableau 8 :**

| **Surfaces** | **Acier selon l'invention** | | **Fini 2R** | | **Fini 2B** | |
|---|---|---|---|---|---|---|
| | Avant | Après | Avant | Après | Avant | Après |
| Brillance | 18,7 | 11,4 | 43,7 | 28 | 6,2 | 4,7 |
| Blancheur | 74 | 66 | 75 | 61 | 73 | 73 |

Sur une surface recuit brillant de la tôle de l'art antérieur, après contact avec le vin rouge et nettoyage, la brillance et la blancheur de la surface se sont fortement modifiées. Ces variations sont moindres sur la surface de la tôle d'acier selon l'invention.

Au cours de l'élaboration des vins, des bactéries acétiques adhérentes à la surface de l'acier de la cuve sont à l'origine de l'acescence. Elles oxydent l'alcool en acide acétique dont une partie est estérifiée en acétate d'éthyle, ce composé possédant une odeur pénétrante et une saveur brûlante, perceptible même à faible concentration, ce qui constitue par conséquent une perte de qualité du vin, pour le vigneron.

Il a été réalisé des mesures d'adhésion de la bactérie acétique « *Acetobacter aceti »* sur la surface de la tôle d'acier selon l'invention et sur une tôle d'acier du type recuit brillant 2R et du type 2B pris en référence. Après 8 jours de contact des tôles avec un vin blanc, à la température ambiante, un léger voile microbien s'est formé en surface. Les surfaces rincées à l'eau froide puis séchées ont été métallisées et analysées au microscope électronique à balayage. Les bactéries adhérentes ont été dénombrées comme représenté sur le tableau 9, l'adhésion étant exprimée en nombre de cellules adhérentes par mm².

**Tableau 9 :**

| **Surfaces** | **Acier selon l'invention** | **Fini 2R** | **Fini 2B** |
|---|---|---|---|
| Cellules/mm² | 1985 | 4327 | 2204 |

L'observation montre que les micro-organismes adhèrent par amas sur les surfaces de la tôle d'acier recuit brillant de référence, la micro-géométrie de cette surface permet la formation d'amas. Les micro-organismes adhérents se regroupent grâce à des forces latérales interagissant entre les micro-organismes. Sur la surface de la tôle d'acier selon l'invention, les micro-organismes adhèrent préférentiellement au niveau des joints de grains de l'acier qui ont un rôle de piège à micro-organismes. De plus, la micro-géométrie de la surface de la tôle d'acier selon l'invention permet le détachement de ces micro-organismes et améliore donc l'hygiène des surfaces.

La tôle d'acier selon l'invention peut être utilisée également en laiterie car l'établissement d'un biofilm sur les surfaces d'acier se fait par l'adhésion de micro-organismes sur les surfaces qui eux mêmes initient l'encrassement et l'entartrage en milieu laitier. La tôle d'acier peut être utilisable également dans l'industrie pharmaceutique ou en milieu hospitalier, où l'hygiène des surfaces demeure un problème primordial.

## Revendications

1. Tôle d'acier inoxydable austénitique utilisable dans le domaine de la cuverie et notamment dans le domaine de la cuverie vinicole, la tôle étant laminée à froid et présentant un état de surface dont la rugosité mesurée par AFM sur des plages de 100 µm par 100 µm est définie par un Ra compris entre 0.05 µm et 0,15 µm.

2. Tôle selon la revendication 1 caractérisée en ce que les joints de grains ont une profondeur comprise entre 0,1 µm et 0,5 µm et de préférence d'environ 0,4 µm et une largeur comprise entre 0,5 µm et 1,8 µm et de préférence d'environ 1,5 µm.

3. Tôle selon la revendication 1 caractérisée en ce que les grains du métal, en surface, ont un diamètre moyen compris entre 5 µm et 20 µm.

4. Tôle selon la revendication 1 caractérisée en ce que l'amplitude moyenne de la surface des grains mesurée par AFM est compris entre 5 nm et 30 nm et de préférence d'environ 10 nm.

5. Procédé de réalisation de la tôle selon les revendications de 1 à 4 caractérisé en ce que qu'on effectue sur une tôle d'acier austénitique ayant une surface de type 2B un laminage à froid de manière à aplatir les grains en les repoussant vers les joints de grains de façon à refermer lesdits joints de grains, la surface de la tôle d'acier présentant des joints de grains de forme étroite et peu profonde et des grains très aplats sans micro-rugosité en surface.

6. Procédé selon la revendication 5 caractérisé en ce que la forme aplatie des grains est obtenue par un laminage à froid final tel qu'un laminage de type « skin pass » avec un taux de réduction inférieur à 5%, de préférence inférieur à 4%.
